# EUROPÄISCHE PATENTSCHRIFT

(11) **EP 2 255 498 B1**
(45) Veröffentlichungstag und Bekanntmachung des Hinweises auf die Patenterteilung: **26.07.2017**
(21) Anmeldenummer: 08870902.7
(22) Anmeldetag: 21.11.2008
(51) Int. Cl.: G05B 19/042, H04L 12/40, G05B 19/02

(54) **FREIGABE VON AN EINER ANLAGE ANGESCHLOSSENEN AUTOMATISIERUNGSEINHEITEN UND ENTSPRECHENDE ANLAGE**
RELEASE OF AUTOMATION UNITS CONNECTED TO A SYSTEM AND CORRESPONDING SYSTEM
AUTORISATION DE FONCTIONNEMENT D'UNITÉS D'AUTOMATISATION RELIÉES À UNE INSTALLATION ET INSTALLATION CORRESPONDANTE

(30) Priorität: 19.01.2008 DE 102008005252
(43) Veröffentlichungstag der Anmeldung: 01.12.2010
(73) Patentinhaber: SEW-EURODRIVE GmbH & Co. KG, 76646 Bruchsal (DE)
(72) Erfinder: MEYER, Harald, 75223 Niefern-Öschelbronn (DE); WILLMANN, Martin, 76199 Karlsruhe (DE)
(74) Vertreter: Tüngler, Eberhard
(86) Internationale Anmeldenummer: PCT/EP2008/009888
(87) Internationale Veröffentlichungsnummer: WO 2009/089864

(56) Entgegenhaltungen:
- EP-A- 1 043 643
- WO-A-01/31407
- WO-A-2004/099979
- WO-A-2004/109411
- DE-A1- 19 911 217

## Beschreibung

Die Erfindung betrifft ein Verfahren zum Betreiben einer Anlage und Anlage.

Anlagen mit einem Zentralrechner, der mit verteilt angeordneten Umrichtern, welche Elektromotoren speisen, zum Datenaustausch verbunden ist, sind bekannt

Aus der WO 01/31407 A ist ein Verfahren bekannt, bei dem im Speicher einer Zentraleinheit eine Vergleichskennung hinterlegt wird, die eine eingetragene Marke ist. Bei Inbetriebnahme einer in der Anlage angeordneten Automatierungseinheit wird eine Kennung mittels des Automatisierungsgeräts von der Autmatisierungseinheit angefordert und verglichen mit der Vergleichskennung.

Somit ist die Inbetriebnahme der Automatisierungseinheit verhinderbar, wenn sie nicht den gewünschten Anforderungen entspricht, also nicht die erfoderlichen Konstallationenen und Spezifikationen aufweist. Das Verfahren muss für jedes Gerät einzeln durchgeführt werden.

Aus der WO 2004/109411 A ist ein Verfahren zum Überwachen eines Feldgeräts bekannt, bei dem in regelmäßigen Zeitabständen eine Kennung des Feldgeräts angefordert und überprüft wird.

Der Erfindung liegt daher die Aufgabe zugrunde, eine Anlage weiterzubilden, wobei eine erhöhte Sicherheit vorsehbar ist.

Erfindungsgemäß wird die Aufgabe bei dem Verfahren nach den in Anspruch 1 und bei der Anlage nach den in Anspruch 5 angegebenen Merkmalen gelöst.

Wichtige Merkmale der Erfindung bei dem Verfahren sind, dass das Verfahren zum

Betreiben einer Anlage, die zumindest ein einen Speicher umfassendes Automatisierungsgerät und mindestens eine Automatisierungseinheit umfasst, vorgesehen ist, wobei in einem ersten Schritt im Speicher Daten, wie Betriebsparameter, weitere Parameter, Adresse und Information zur Identifikation zumindest einer Automatisierungseinheit, hinterlegt werden,
in einem zweiten Schritt entsprechende Daten von der Automatisierungseinheit angefordert und an mindestens ein Automatisierungsgerät übertragen werden,
in einem dritten Schritt die im Speicher hinterlegten Daten mit den von der Automatisierungseinheit übertragenen Daten verglichen werden,
in einem vierten Schritt abhängig vom Ergebnis des Vergleichs eine Freigabe der Automatisierungseinheit ausgeführt wird.

Von Vorteil ist dabei, dass ein Austausch einer Einheit erkennbar ist und somit die Sicherheit in der Anlage erhöht ist. Denn jeder Einheit ist eine Identifizierungsinformation zugeordnet, so dass bei Austausch oder Entfernen dieser Einheit dies feststellbar ist. Außerdem ist es somit ermöglicht der nicht ausgetauschten Einheit eine Freigabe für den Betrieb zu erteilen und der getauschten Einheit eine Freigabe nur nach einer weiteren Überprüfung und gegebenenfalls Überschreibung von Parametern zu erteilen.

Unter Sicherheit der Anlage wird hier auch immer der Vorteil verstanden, auch nach Austauschen einer Einheit die gleichartige Betriebsweise der Anlage gewährleistbar zu machen.

Bei einer vorteilhaften Ausgestaltung wird bei Übereinstimmung der Daten als Ergebnis des Vergleichs eine Freigabe der Automatisierungseinheit ausgeführt. Von Vorteil ist dabei, dass bei einer getauschten Einheit der Tausch erkennbar ist und in diesem Fall alle Daten verglichen werden. Wenn alle Daten übereinstimmen, wird eine Freigabe für diese Einheit erteilt und dies zur entsprechend zugehörigen Identifizierungsinformation zugeordnet, so dass beim nächsten Überprüfen dieser Einheit sofort eine Freigabe erteilbar ist. Wenn die Daten nicht übereinstimmen, wird keine Freigabe erteilt sondern es werden die Daten überschrieben mit den im Speicher S hinterlegten.

Bei einer vorteilhaften Ausgestaltung werden im dritten Schritt bei Übereinstimmung der auf den Gerätetyp, auf die Optionen und auf die Hardware- und/oder Software-Version bezogenen Parameter und bei Nicht-Übereinstimmung der weiteren Daten als Ergebnis des Vergleichs diese weiteren Daten vom Speicher in die Automatisierungseinheit übertragen und dort hinterlegt,
wobei im vierten Schritt eine Freigabe der Automatisierungseinheit erfolgt. Von Vorteil ist dabei, dass bei einem getauschten Gerät verglichen wird, ob ein technisch gleichwertiges Gerät vorhanden ist, also sowohl bezüglich der Hardware als auch bezüglich der Software. Somit können dann die gleichen Daten in die getauschte Einheit vom Speicher aus übertragen werden und die auf diese Weise nun gleichwertige getauschte Einheit wird dann künftig zum Betrieb frei gegeben. Dabei wird die Identifizierungsinformation der getauschten Einheit im Speicher hinterlegt.

Bei einer vorteilhaften Ausgestaltung erfolgt im dritten und vierten Schritt bei Nicht-Übereinstimmung der auf den Gerätetyp, auf die Optionen und auf die Hardware- und/oder Software-Version bezogenen Parameter keine Freigabe der Automatisierungseinheit.

Bei einer vorteilhaften Ausgestaltung wird zumindest die Abfolge aus zweitem drittem und viertem Schritt zyklisch wiederholt, insbesondere in regelmäßigen Zeitabständen während des Betriebs der Anlage.

Bei einer vorteilhaften Ausgestaltung ist zumindest einer der Adressen ein Dummy-Identifikationsschlüssel zugeordnet, so dass bei der ersten Inbetriebnahme stets alle Automatisierungseinheiten parametrierbar sind.

Wichtige Merkmale bei der Anlage, umfassend ein einen Speicher umfassendes Automatisierungsgerät und Automatisierungseinheiten, sind, dass im Speicher Daten, wie Betriebsparameter, weitere Parameter, Adresse und Information zur Identifikation der Automatisierungseinheit, hinterlegbar oder hinterlegt sind,
wobei Mittel zum Anfordern und Übertragen entsprechender Daten von der Automatisierungseinheit an das Automatisierungsgerät vorgesehen sind,
wobei das Automatisierungsgerät Mittel zum Vergleichen der im Speicher hinterlegten Daten mit den von der Automatisierungseinheit übertragenen Daten umfasst,
wobei Mittel zur Freigabe mit den Mitteln zum Vergleichen verbunden sind.

Von Vorteil ist dabei, dass das Mittel zum Vergleichen mit dem Speicher verbunden ist und somit ein Vergleich der von der Automatisierungseinheit übertragenen Daten mit den im Speicher hinterlegten Daten ermöglicht ist. Da das Mittel zum Vergleichen mit dem Mittel zur Freigabe verbunden ist, ist eine Freigabe der Automatisierungseinheit abhängig vom Ergebnis des Vergleichs ermöglicht. Auf diese Weise ist also nach Erkennen eines getauschten Geräts eine Freigabe erst nach Übertragung von im Speicher hinterlegten Daten an die Automatisierungseinheit ermöglicht und somit die Sicherheit in der Anlage erhöht.

Bei einer vorteilhaften Ausgestaltung stellt mindestens ein Automatisierungsgerät unipolare Versorgungsspannung bereit, aus der die Automatisierungseinheiten versorgt sind, insbesondere wobei das Automatisierungsgerät aus der Netzwechselspannung versorgt ist. Von Vorteil ist dabei, dass das Automatisierungsgerät mit den Automatisierungseinheiten mittels Energiebus und auch Kommunikationsverbindung, also Datenbus, verbindbar ist. Auf diese Weise ist es sogar ermöglicht die Daten höher frequent aufzumodulieren auf den Energiebus, der beispielsweise als Starkstromschienen ausführbar ist, und somit Verkabelung einzusparen, die Übersichtlichkeit in der Anlage und somit auch die Sicherheit zu erhöhen. Insbesondere ist bei der Energieversorgung der Automatisierungseinheit aus dem Automatisierungsgerät vorteilhaft, dass die Einheiten bezüglich ihrer Versorgung von dem Gerät abhängen. Wenn die Versorgung bereit gestellt ist, ist auch eine Kommunikationsverbindung bereit stellbar und somit Energie und Daten aus dem Gerät für die Einheit übertragbar.

Bei einer vorteilhaften Ausgestaltung ist das Automatisierungsgerät über zumindest eine Kommunikationsverbindung zum Datenaustausch mit den Automatisierungseinheiten verbunden. Von Vorteil ist dabei, dass die Einheiten bezüglich der Datenversorgung von dem Gerät abhängen und somit nicht eigenständig ihre Datenversorgung stattfindet. Auf diese Weise sind die Einheiten gut kontrollierbar und Sicherheit ist erhöht.

Bei einer vorteilhaften Ausgestaltung ist ein weiteres Automatisierungsgerät mit einem ersten Automatisierungsgerät über zumindest eine weitere Kommunikationsverbindung zum Datenaustausch verbunden, wobei das erste mit den Automatisierungseinheiten über eine erste Kommunikationsverbindung zum Datenaustausch verbunden ist. Von Vorteil ist dabei, dass die Daten in einem weiter entfernt stationierten Gerät, wie beispielsweise Zentralrechner oder per Internet verbundener Rechner, bevorratbar sind. Auf diese Weise ist die Sicherheit weiter erhöht, da somit ein redundanter Datensatz an einem anderen Ort vorgesehen ist, insbesondere also an einem Ort, der anderen Risiken ausgesetzt ist.

Bei einer vorteilhaften Ausgestaltung ist der Speicher im ersten oder weiteren Automatisierungsgerät vorgesehen. Von Vorteil ist dabei, dass der Speicher in demjenigen Gerät umfasst ist, in welchem auch die Steuereinheit zur Beeinflussung der Einheit vorsehbar ist. Somit ist der Speicher direkt beispielsweise in einer dezentral vorgesehenen Vorrichtung im Feld, also außerhalb des Schaltschrankes der Anlage vorsehbar.

Bei einer vorteilhaften Ausgestaltung umfasst die Automatisierungseinheit einen Umrichter. Von Vorteil ist dabei, dass der Umrichter aus der unipolaren Spannung versorgbar ist, insbesondere also nur einen Wechselrichter umfasst. Außerdem sind die Parameter des Umrichters in dem Speicher redundant hinterlegbar und somit die Sicherheit erhöht. Denn falls die Einheit ausfällt, ist es vorgesehen, dass die im Speicher hinterlegten Daten in eine ausgetauschte Einheit übertragbar sind und somit ein gleichartiger Betrieb auch nach Austauschen einer Einheit vorsehbar ist.

Bei einer vorteilhaften Ausgestaltung umfasst das Automatisierungsgerät einen Rechner. Von Vorteil ist dabei, dass das Automatisierungsgerät als Steuerung ausführbar ist, insbesondere als im Feld und nicht im Schaltschrank vorgesehenes Feldgerät, also dezentrale Steuerung.

Das Automatisierungsgerät ist im Schaltschrank vorsehbar und somit der Schutz der im Speicher im Automatisierungsgerät hinterlegten Daten erhöhbar und somit auch die Sicherheit der Anlage. Weitere Vorteile ergeben sich aus den Unteransprüchen.

### Bezugszeichenliste

- 1: Automatisierungsgerät
- 2: Automatisierungseinheit
- 3: weiteres Automatisierungsgerät
- S: Speicher
- K1: Kommunikationsverbindung
- K2: Kommunikationsverbindung

Die Erfindung wird nun anhand einer Abbildung näher erläutert:

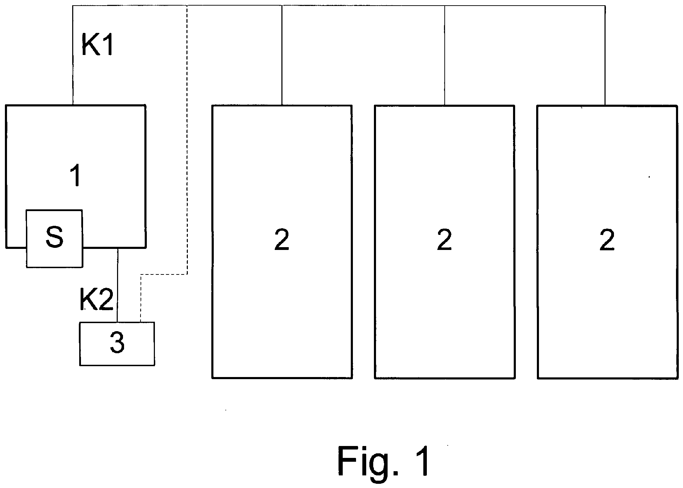

In der Figur 1 ist eine erfindungsgemäße Vorrichtung schematisch skizziert.

Dabei ist ein Automatisierungsgerät 1, das einen Speicher S umfasst, über eine Kommunikationsverbindung K1 mit Automatisierungseinheiten 2 zum Datenaustausch verbunden.

Ein weiteres Automatisierungsgerät 3 ist ebenfalls an die Kommunikationsverbindung K1 angeschlossen und außerdem über eine weitere Kommunikationsverbindung K2 mit dem ersten Automatisierungsgerät 1 verbunden.

Die Kommunikationsverbindung K1 und/oder K2 sind als Busleitungen eines Bussystems oder als kabelloses Bussystem, wie WLAN, Infrarot-gestütztes System oder dergleichen, ausgeführt.

Bei einem weiteren erfindungsgemäßen Ausführungsbeispiel ist das Automatisierungsgerät 1 zur Versorgung der Automatisierungseinheiten 2 über einen Energiebus mit diesen verbunden. Hierzu umfasst das Automatisierungsgerät 1 vorteiligerweise ein Versorgungsmodul, das aus einer Netzwechselspannung eine unipolare Spannung, insbesondere Zwischenkreisspannung, erzeugt. Diese unipolare Spannung wird über Stromschienen als Energiebus den Automatisierungseinheiten zugeführt, die jeweils einen Wechselrichter umfassen, der einen jeweiligen zugehörigen Elektromotor speist. Vorzugsweise ist das Versorgungsmodul rückspeisefähig. Auf diese Weise ist der Gesamtenergieverbrauch reduzierbar, insbesondere bei Betriebsweisen, in denen einige der Automatisierungseinheiten generatorisch betrieben werden und die motorisch betriebenen Automatisierungseinheiten diese generatorisch erzeugte Energie zugeführt wird.

Bei der Inbetriebnahme der gesamten in Figur 1 dargestellten Anlage werden BetriebsParameter für die jeweiligen Automatisierungseinheiten festgelegt, beispielsweise mittels eines zur Parametrierung mit der Automatisierungseinheit zum Datenaustausch verbundenen Rechners, oder mittels eines Datenträgers, der mit der jeweiligen Automatisierungseinheit verbunden wird oder in die jeweilige Automatisierungseinheit eingesteckt wird. Die BetriebsParameter umfassen beispielsweise Beschleunigungsrampen oder Werte regelungstechnischer Größen.

Außerdem wird bei oder vor der Inbetriebnahme jeder Automatisierungseinheit eine Information zur Identifikation dieser jeweiligen Einheit zugeordnet.

Darüber hinaus werden auch weitere Parameter, die Merkmale der Hardware- und/oder Software-Ausprägung der Automatisierungseinheit zugeordnet, wie beispielsweise Gerätetyp, enthaltene Optionen, Hardware- und/oder Softwareoptionen.

Jeder Automatisierungseinheit 2 wird auch eine Adresse zugeordnet, unter welcher sie über die Kommunikationsverbindung von zumindest dem Automatisierungsgerät 1 ansprechbar ist zum Datenaustausch.

Nach Abschluss der Inbetriebnahme werden diese Betriebsparameter, Parameter, Adresse und die Information zur Identifikation an das Automatisierungsgerät über die Kommunikationsverbindung K1 übertragen und im Speicher S abgelegt.

Wird zu einem späteren Zeitpunkt das Automatisierungsgerät ausgeschaltet oder die Netzversorgung ausgeschaltet oder unterbrochen und danach die Stromversorgung wieder eingeschaltet oder das Automatisierungsgerät eingeschaltet, wird in einem ersten Verfahrensschritt die jeweilige Information zur Identifikation jeder verbundenen Automatisierungseinheit verglichen mit der im Speicher S hinterlegten Information. Dabei wird die Automatisierungseinheit mittels ihrer Adresse identifiziert.

Weicht die Information zur Identifikation von der im Speicher hinterlegten nicht ab, erfolgt eine Freigabe der Automatisierungseinheit zum Betrieb.

Weicht die Information zur Identifikation von der im Speicher hinterlegten ab, ist somit ein Gerätetausch der Automatisierungseinheit erkennbar. In diesem Fall erfolgt als zweiter Verfahrensschritt ein Vergleich aller in der Automatisierungseinheit gespeicherten und der im Speicher S des Automatisierungsgeräts hinterlegten Betriebsparameter und Parameter.

Wenn im zweiten Verfahrensschritt alle diese Betriebsparameter und Parameter ohne Unterschied sind, erfolgt ebenfalls eine Freigabe der Automatisierungseinheit zum Betrieb. Außerdem wird in diesem Fall auch die im Speicher S hinterlegte Information zur Identifikation mit der zugehörigen neuen Information zur Identifikation der als getauscht erkannten Automatisierungseinheit überschrieben.

Wenn jedoch im zweiten Verfahrensschritt einer der Betriebsparameter und Parameter unterschiedlich ist, erfolgt keine Freigabe der Automatisierungseinheit zum Betrieb sondern es wird eine Warnung ausgegeben und an mit dem Automatisierungsgerät verbundenen Anzeigemitteln angezeigt.

Bei einem anderen erfindungsgemäßen Ausführungsbeispiel wird im zweiten Verfahrensschritt nicht ein Vergleich aller Betriebsparameter und Parameter sondern nur der Vergleich all derjenigen Parameter ausgeführt, die die Merkmale der Hardware und Software-Ausprägungen der Automatisierungseinheit beschreiben. Hierunter sind beispielsweise der Gerätetyp, die enthaltenen Optionen, also Optionskarten und dergleichen, sowie der Hardwareversionsstand und der Softwareversionsstand zu verstehen. Falls nun der Vergleich dieser Merkmale erfolgreich ist, also alle Merkmale der getauschten Automatisierungseinheit mit den im Speicher hinterlegten Merkmalen übereinstimmen, werden alle Betriebsparameter und weiteren Parameter vom Speicher S in die Automatisierungseinheit übertragen und dort hinterlegt.

Bei einem weiteren erfindungsgemäßen Ausführungsbeispiel wird statt des Speichers S ein weiteres Automatisierungsgerät 3 verwendet, das einen entsprechenden Speicher umfasst. Das weitere Automatisierungsgerät 3 ist dabei beispielsweise ein über die Kommunikationsverbindung K2 mit dem Automatisierungsgerät 1 verbundener Rechner oder ein direkt an die Kommunikationsverbindung K1 angeschlossener Rechner. In Weiterbildung ist es auch ermöglicht die Information zur Identifikation sowie die auf die Merkmale bezogenen Parameter im Speicher S des Automatisierungsgeräts 1 zu hinterlegen und im zweiten Verfahrensschritt den Vergleich dieser Daten mit den entsprechenden Daten der Automatisierungseinheit auszuführen, wobei nach Feststellung der Gleichheit der Daten die restlichen Parameter aus dem weiteren Automatisierungsgerät 3 bezogen werden. Dies ist insbesondere bei verteilten und umfangreichen Anlagen und/oder anlagen mit drahtloser Kommunikation vorteilhaft.

Bei einem weiteren erfindungsgemäßen Ausführungsbeispiel wird die Überprüfung der Information zur Identifikation zur zugehörigen Adresse der jeweiligen Automatisierungseinheit zeitlich wiederholt ausgeführt, also das vorbeschriebene Verfahren zyklisch wiederholt. Von besonderem Vorteil ist dies bei hotplugfähigen Automatisierungseinheiten, also während des Betriebs tauschbaren Automatisierungseinheiten.

Bei einem anderen erfindungsgemäßen Ausführungsbeispiel werden nicht bei der Inbetriebnahme der gesamten in Figur 1 dargestellten Anlage sondern zu einem anderen Zeitabschnitt die auf den Gerätetyp, auf die Optionen, auf die Hardware- und/oder Software-Version bezogenen Parameter in dem Automatisierungsgerät hinterlegt. Somit sind auch Listen von solchen Parametern für jede Automatisierungseinheit mehrfach hinterlegbar, um beispielsweise mehrere Gerätevarianten im Verbund zuzulassen.

Bei einem weiteren erfindungsgemäßen Ausführungsbeispiel werden Dummy-Informationen zur Identifikation hinterlegt, so dass bei Inbetriebnahme oder zu einem anderen Zeitpunkt in allen Automatisierungseinheiten die Parametersätze gleichzeitig hinterlegbar sind. Somit sind alle Automatisierungseinheiten in einem einzigen Schritt in einem entsprechenden Zeitabschnitt parametrierbar. Dies ist besonders vorteilhaft, wenn die Anlage mehrfach identisch hergestellt wird und die gesamten Informationen durch Einstecken des Speichers S, der die für jede Anlage gleichermaßen kopierte Information umfasst zum Parametrieren aller Automatisierungseinheiten vorgesehen ist.

Bei einem weiteren erfindungsgemäßen Ausführungsbeispiel werden die Betriebsparameter, Parameter und/oder die Information zur Identifikation von einem weiteren Automatisierungsgerät bezogen statt aus dem Speicher S des ersten Automatisierungsgeräts. Dieses weitere Automatisierungsgerät ist dabei entweder über die Kommunikationsverbindung K1 mit den Automatisierungseinheiten zum Datenaustausch verbunden oder mit dem ersten Automatisierungsgerät über eine andere Kommunikationsverbindung K2 zum Datenaustausch verbunden, das wiederum über die Kommunikationsverbindung K1 mit den Automatisierungseinheiten zum Datenaustausch verbunden ist.

## Patentansprüche

1. Verfahren zum Betreiben einer Anlage, die zumindest ein einen Speicher (S) umfassendes Automatisierungsgerät (1) und mindestens eine Automatisierungseinheit (2) umfasst,
**dadurch gekennzeichnet, dass**
in einem ersten Schritt im Speicher (S) Daten, nämlich Betriebsparameter, weitere Parameter, Adresse und Information zur Identifikation zumindest einer Automatisierungseinheit (2) hinterlegt werden,
in einem zweiten Schritt entsprechende Daten von der Automatisierungseinheit (2) angefordert und an mindestens ein Automatisierungsgerät (1) übertragen werden, in einem dritten Schritt die im Speicher (S) hinterlegten Daten mit den von der Automatisierungseinheit (2) übertragenen Daten verglichen werden, in einem vierten Schritt abhängig vom Ergebnis des Vergleichs eine Freigabe der Automatisierungseinheit (2) ausgeführt wird,
wobei im dritten Schritt bei Übereinstimmung der auf den Gerätetyp, auf die Optionen und auf die Hardware- und/oder Software-Version bezogenen Parameter und bei Nicht-Übereinstimmung der weiteren Parameter als Ergebnis des Vergleichs diese weiteren Parameter vom Speicher (S) in die Automatisierungseinheit (2) übertragen und dort hinterlegt werden,
wobei im vierten Schritt eine Freigabe der Automatisierungseinheit (2) erfolgt,
wobei in allen Automatisierungseinheiten (2) Dummy-Informationen zur Identifikation hinterlegt werden, so dass bei Inbetriebnahme oder zu einem anderen Zeitpunkt alle Automatisierungseinheiten (2) gleichzeitig parametrierbar sind.

2. Verfahren nach Anspruch 1,
**dadurch gekennzeichnet, dass**
bei Übereinstimmung der Daten als Ergebnis des Vergleichs eine Freigabe der Automatisierungseinheit (2) ausgeführt wird.

3. Verfahren nach mindestens einem der vorangegangenen Ansprüche,
**dadurch gekennzeichnet, dass**
im dritten und vierten Schritt bei Nicht-Übereinstimmung der auf den Gerätetyp, auf die Optionen und auf die Hardware- und/oder Software-Version bezogenen Parameter keine Freigabe der Automatisierungseinheit (2) erfolgt.

4. Verfahren nach mindestens einem der vorangegangenen Ansprüche,
**dadurch gekennzeichnet, dass**
zumindest die Abfolge aus zweitem, drittem und viertem Schritt zyklisch wiederholt wird.

5. Anlage zur Durchführung eines Verfahrens nach mindestens einem der vorangegangenen Ansprüche,
wobei die Anlage ein einen Speicher (S) umfassendes Automatisierungsgerät (1) und Automatisierungseinheiten (2) aufweist,
**dadurch gekennzeichnet, dass**
im Speicher (S) Daten, nämlich Betriebsparameter, weitere Parameter, Adresse und Information zur Identifikation der Automatisierungseinheit (2), hinterlegbar oder hinterlegt sind,
wobei Mittel zum Anfordern und Übertragen entsprechender Daten von der Automatisierungseinheit (2) an das Automatisierungsgerät (1) vorgesehen sind,
wobei das Automatisierungsgerät (1) Mittel zum Vergleichen der im Speicher (S) hinterlegten Daten mit den von der Automatisierungseinheit (2) übertragenen Daten umfasst,
wobei Mittel zur Freigabe mit den Mitteln zum Vergleichen verbunden sind.

6. Anlage nach Anspruch 5,
**dadurch gekennzeichnet, dass**
mindestens ein Automatisierungsgerät (1) die Automatisierungseinheiten (2) mit einer unipolaren Versorgungsspannung versorgt, wobei das Automatisierungsgerät (1) aus einer Netzwechselspannung versorgt ist.

7. Anlage nach einem der Ansprüche 5 bis 6,
**dadurch gekennzeichnet, dass**
das Automatisierungsgerät (1) über zumindest eine Kommunikationsverbindung (K1) zum Datenaustausch mit den Automatisierungseinheiten (2) verbunden ist.

8. Anlage nach Anspruch 7,
**dadurch gekennzeichnet, dass**
ein weiteres Automatisierungsgerät (3) mit einem ersten Automatisierungsgerät (1) über zumindest eine weitere Kommunikationsverbindung (K2) zum Datenaustausch verbunden ist, wobei das erste Automatisierungsgerät mit den Automatisierungseinheiten (2) über eine erste Kommunikationsverbindung (K1) zum Datenaustausch verbunden ist.

9. Anlage nach einem der Ansprüche 5 bis 8,
**dadurch gekennzeichnet, dass**
der Speicher (S) im ersten oder weiteren Automatisierungsgerät (3) vorgesehen ist.

10. Anlage nach einem der Ansprüche 5 bis 9,
**dadurch gekennzeichnet, dass**
die Automatisierungseinheit (2) einen Umrichter umfasst.

11. Anlage nach einem der Ansprüche 5 bis 10,
**dadurch gekennzeichnet, dass**
das Automatisierungsgerät (1) einen Rechner umfasst.

## Claims

1. A process for operating a system, which comprises at least one automation device (1), comprising a memory (S), and at least one automation unit (2), **characterised in that**
in a first step, data, namely operating parameters, further parameters, address and information for the identification of at least one automation unit (2) are stored in the memory (S),
in a second step, corresponding data are requested from the automation unit (2) and transmitted to at least one automation device (1),
in a third step, the data stored in the memory (S) are compared with the data transmitted from the automation unit (2),
in a fourth step, depending on the result of the comparison, an enabling of the automation unit (2) is carried out,
wherein, in the third step, if the parameters relating to the device type, the options and the hardware and/or software version match and the further parameters do not match as a result of the comparison, these further parameters are transmitted from the memory (S) to the automation unit (2) and stored there,
wherein, in the fourth step, an enabling of the automation unit (2) takes place,
wherein dummy information for identification is stored in all automation units (2) so that all automation units (2) may be parameterised simultaneously during commissioning or at another time.

2. A process according to Claim 1,
**characterised in that**,
if the data match as a result of the comparison, an enabling of the automation unit (2) is carried out.

3. A process according to at least one of the preceding claims,
**characterised in that**,
in the third and fourth step, if the parameters relating to the device type, the options and the hardware and/or software version do not match, an enabling of the automation unit does not take place.

4. A process according to at least one of the preceding claims,
**characterised in that**
at least the sequence of the second, third and fourth step is repeated cyclically.

5. A system for carrying out a process according to at least one of the preceding claims,
wherein the system has an automation device (1), comprising a memory (S), and automation units (2), **characterised in that**
data, namely operating parameters, further parameters, address and information for the identification of the automation unit (2) may be stored, or are stored, in the memory (S),
wherein means for requesting and transmitting corresponding data from the automation unit (2) to the automation device (1) are provided,
wherein the automation device (1) comprises means for comparing the data stored in the memory (S) with the data transmitted from the automation unit (2), wherein enabling means are connected to the comparison means.

6. A system according to Claim 5,
**characterised in that**
at least one automation device (1) supplies the automation units (2) with a unipolar supply voltage, wherein the automation device (1) is supplied from an alternating mains voltage.

7. A system according to one of Claims 5 to 6,
**characterised in that**
the automation device (1) is connected to the automation units (2) via at least one communication connection (K1) for data exchange.

8. A system according to Claim 7,
**characterised in that**
a further automation device (3) is connected to a first automation device (1) via at least one further communication connection (K2) for data exchange, wherein the first automation device is connected to the automation units (2) via a first communication connection (K1) for data exchange.

9. A system according to one of Claims 5 to 8,
**characterised in that**
the memory (S) is provided in the first or further automation device (3).

10. A system according to one of Claims 5 to 9,
**characterised in that**
the automation unit (2) comprises a converter.

11. A system according to one of Claims 5 to 10,
**characterised in that**
the automation device (1) comprises a processor.

## Revendications

1. Procédé d'actionnement d'une installation comprenant au moins un appareil d'automatisation (1) doté d'une mémoire (S), et au moins une unité d'automatisation (2),
**caractérisé par le fait que**,
lors d'une première étape, des données, c'est-à-dire des paramètres fonctionnels, des paramètres supplémentaires, une adresse et une information ciblant l'identification d'au moins une unité d'automatisation (2), sont sauvegardé(e)s dans la mémoire (S) ;
lors d'une deuxième étape, des données correspondantes sont requises par l'unité d'automatisation (2) et sont transmises à au moins un appareil d'automatisation (1) ;
lors d'une troisième étape, les données sauvegardées dans la mémoire (S) sont comparées aux données transmises par ladite unité d'automatisation (2) ;
lors d'une quatrième étape, une validation de ladite unité d'automatisation (2) est effectuée en fonction du résultat de la comparaison,
sachant que lors de la troisième étape, en cas de concordance des paramètres se rapportant au type d'appareil, aux options et à la version du matériel et/ou du logiciel, et en cas de non-concordance des paramètres supplémentaires en tant que résultat de la comparaison, ces paramètres supplémentaires sont transmis, depuis la mémoire (S), à l'unité d'automatisation (2) dans laquelle ils sont sauvegardés,
sachant qu'une validation de ladite unité d'automatisation (2) est effectuée lors de la quatrième étape,
sachant que des informations factices ciblant l'identification sont sauvegardées dans toutes les unités d'automatisation (2), de sorte que toutes les unités d'automatisation (2) peuvent être paramétrées en simultanéité lors d'une mise en fonction, ou à un autre moment.

2. Procédé selon la revendication 1,
**caractérisé par le fait**
**qu'**une validation de l'unité d'automatisation (2) est effectuée en cas de concordance des données en tant que résultat de la comparaison.

3. Procédé selon au moins l'une des revendications précédentes,
**caractérisé par le fait que**,
lors des troisième et quatrième étapes, aucune validation de l'unité d'automatisation (2) n'est effectuée en cas de non-concordance des paramètres se rapportant au type d'appareil, aux options et à la version du matériel et/ou du logiciel.

4. Procédé selon au moins l'une des revendications précédentes, **caractérisé par le fait**
**qu'**au moins l'ordre séquentiel des deuxième, troisième et quatrième étapes est réitéré cycliquement.

5. Installation dévolue à la mise en oeuvre d'un procédé conforme à au moins l'une des revendications précédentes,
ladite installation comprenant un appareil d'automatisation (1) doté d'une mémoire (S), et des unités d'automatisation (2),
**caractérisée par le fait que**
des données, c'est-à-dire des paramètres fonctionnels, des paramètres supplémentaires, une adresse et une information ciblant l'identification de l'unité d'automatisation (2), peuvent être ou sont sauvegardé(e)s dans la mémoire (S),
des moyens étant prévus pour requérir et transmettre, par l'unité d'automatisation (2), des données correspondantes à l'appareil d'automatisation (1),
ledit appareil d'automatisation (1) incluant des moyens affectés à la comparaison des données, sauvegardées dans ladite mémoire (S), avec les données transmises par ladite unité d'automatisation (2),
des moyens de validation étant connectés auxdits moyens de comparaison.

6. Installation selon la revendication 5,
**caractérisée par le fait**
**qu'**au moins un appareil d'automatisation (1) alimente les unités d'automatisation (2) en une tension d'alimentation unipolaire, ledit appareil d'automatisation (1) étant alimenté par une tension de courant alternatif du réseau.

7. Installation selon l'une des revendications 5 à 6,
**caractérisée par le fait que**
l'appareil d'automatisation (1) est raccordé aux unités d'automatisation (2) par l'intermédiaire d'au moins une connexion de communication (K1), en vue de l'échange de données.

8. Installation selon la revendication 7,
**caractérisée par le fait**
**qu'**un appareil supplémentaire d'automatisation (3) est raccordé à un premier appareil d'automatisation (1) par l'intermédiaire d'au moins une connexion supplémentaire de communication (K2), en vue de l'échange de données, ledit premier appareil d'automatisation étant raccordé aux unités d'automatisation (2) par l'intermédiaire d'une première connexion de communication (K1), en vue de l'échange de données.

9. Installation selon l'une des revendications 5 à 8,
**caractérisée par le fait que**
la mémoire (S) est prévue dans le premier appareil, ou dans l'appareil supplémentaire d'automatisation (3).

10. Installation selon l'une des revendications 5 à 9,
**caractérisée par le fait que**
l'unité d'automatisation (2) inclut un convertisseur.

11. Installation selon l'une des revendications 5 à 10,
**caractérisée par le fait que**
l'appareil d'automatisation (1) inclut un ordinateur.
